# EUROPÄISCHE PATENTANMELDUNG

(11) **EP 2 128 531 A2**
(43) Veröffentlichungstag der Anmeldung: **02.12.2009**
(21) Anmeldenummer: 09007284.4
(22) Anmeldetag: 29.05.2009
(51) Int. Cl.: F24D 3/18

(54) **Anlage zur Nutzung von Wärmeeenergie aus Kanälen und Wärmeeenergie-Nutzungsverfahren**

(30) Priorität: 30.05.2008 DE 102008026240
(71) Anmelder: Enders, Torsten, 09496 Marienberg (DE); Schubert, Volker, 09496 Marienberg (DE)
(72) Erfinder: Enders, Torsten, 09496 Marienberg (DE); Schubert, Volker, 09496 Marienberg (DE)
(74) Vertreter: Thomas, Matthias

(57) **Zusammenfassung**

Die Erfindung betrifft die thermische Nutzung des Energieträgers Luft in Kanälen mittels einer Anlage zur Nutzung von Wärmeenergie, welche durch Anordnung eines Wärmetauschers in einem Kanal die benötigte Energie dem Medium Luft entnimmt. Diese Luft steht als erneuerbare Energieressource in einem relativ gleichmäßigen Temperaturniveau, immer über dem Gefrierpunkt, ständig zur Verfügung. Die Anlage deckt in Kombination mit einer angepassten Luft-Wasser-Wärmepumpe einen Bedarf an warmem Heizwasser und warmem Wasser zum sonstigen Gebrauch sowie an Kälte, in einem Temperaturbereich von ca. 10 bis ca. 15 ° C in Kombination mit einem Kühler.

## Beschreibung

Die Erfindung betrifft die Nutzung der in Kanälen vorhandenen Luft als Energieträger.

Bekannt sind Heißwasserheizungen unter Anwendung von Brennwertkesseln, die fossile Brennstoffe nutzen. Die Verwendung fossiler Brennstoffe unterliegt einer langfristig endlichen Verfügbarkeit und führt zu einer hohen CO₂-Belastung der Umwelt.

Bekannt sind auch Lösungen mit Wärmepumpen, die Energie der Umgebungsluft in Gebäuden oder der Atmosphäre entnehmen.

Atmosphärisch arbeitende Luft-Wasser-Wärmepumpen erreichen bei Lufttemperaturen im Minusbereich nur geringe Wirkungsgrade. In extremen Betriebsbereichen ist ein Nachheizen, in der Regel durch einen elektrischen Heizstab, erforderlich. Diese Betriebsweise verringert den Wirkungsgrad solcher Anlagen.

Weiter bekannt sind Kühler, die ein bestimmtes Temperaturniveau über einen energetisch aufwendigen Kompressions- oder Absorptionsprozess erreichen.

Um die zum Heizen oder Kühlen notwendige Energie bereitzustellen, ist bereits vorgeschlagen worden, Wärmeenergie dem Abwasser in Abwasserkanälen zu entziehen. Dabei entspricht es der Aufgabe vorhandener erdverlegter Abwasserkanalsysteme, dass beständig Schmutzwasser in unterschiedlichen Mengen und mit unterschiedlichen Temperaturen abgeführt wird. Durch warmes Abwasser und Erdwärme wird gesichert, dass Temperaturen über dem Gefrierpunkt stets erreicht werden.

So ist in DE 10 2006 039 250 A1 vorgeschlagen worden, in den Abwasserstrom eine Wellrohrleitung zu verlegen. Das im Wellrohr befindliche Übertragungsmedium entzieht dabei die Wärmeenergie direkt dem Abwasser.

Durch die Verwendung von Wellrohren wird ein hoher Umwandlungs-Wirkungsgrad erreicht. Der zugleich hohe Strömungswiderstand von Wellrohren mindert den Effekt jedoch bei den notwendigen großen Leitungslängen wieder.

Wesentlichster Nachteil solcher Wärmetauscher ist jedoch die direkte Installation im strömenden Abwasser. Da Abwässer gewöhnlich auch Feststoffe mitführen, besteht eine ständige Gefahr der Ausbildung von Hindernissen durch hängen gebliebenes Gut und Rückstaugefahr bis zu Verstopfungen der Abwasserkanäle. Entsprechend müssen Abwasserkanäle mit solchen Wärmetauschern ständig kontrolliert, nötigenfalls gereinigt oder mit aufwendigen Feststoffabscheidern versehen werden.

Aufgabe der Erfindung ist es deshalb, eine Anlage und ein Verfahren zum Betrieb einer Anlage zu schaffen, die die thermische Nutzung der Luft in Kanälen sichern. Gleichzeitig sollten durch Ausnutzung optimaler energetischer Bedingungen die Vorteile der Luft-Wasser-Wärmepumpe einbezogen werden. Aufgabe der Erfindung ist es weiterhin einen energetisch und betriebswirtschaftlich verwertbaren Zusatznutzen zu ermöglichen. Bezogen auf die Jahresarbeitszahl, das COP und die Einsetzbarkeit der Anlage beziehungsweise des Verfahrens soll diese wesentlich verbessert und erweitert werden.

Erfindungsgemäß wird diese Aufgabe gelöst durch eine Anlage nach den Merkmalen des kennzeichnenden Teils des Patentanspruchs 1 in Verbindung mit den Merkmalen des Oberbegriffes dieses Anspruches, die dem Medium Luft in einem Kanal die benötigte Energie entnimmt oder übergibt. Erfindungsgemäß wird die Aufgabe durch ein Verfahren zum Betrieb der Anlage nach den Merkmalen des kennzeichnenden Teils des Patentanspruches 8 in Verbindung mit den Merkmalen des Oberbegriffes dieses Patentanspruches gelöst. Im Hinblick auf die Verwendung der Anlage und des Verfahrens wird die Aufgabe entsprechend den Merkmalen des kennzeichnenden Teils des Patentanspruches 9 in Verbindung mit dessen Merkmalen des Oberbegriffes gelöst. Unteransprüche bilden mit ihren Merkmalen die Erfindung auf bestimmte Weise fort.

In der nachfolgenden Beschreibung, den Ausführungsbeispielen und den Patentansprüchen werden die nachstehend aufgeführten Begriffe mit den nachstehend gegebenen Inhalten verwendet:
Kanal - ist jede Art einer lang gestreckten Röhre beliebigen Querschnitts, in der wenigstens ein Anteil stehender oder strömender Luft vorhanden ist. Insbesondere zählen dazu industriell genutzte Kanäle, wie Kühltunnel, Abwasserkanäle, Bergwerksstollen, Straßen- und Bahntunnel.
Wärmetauscher - ist jede Art einer zur Aufnahme der Wärme der Kanalluft geeigneten Einrichtung.
Erdwärme - ist die in die Kanalluft eingebrachte Wärme des Erdreichs beziehungsweise der kanalaussteifenden Bauteile.
Zugang - ist die Möglichkeit, einen Wärmetauscher in den Kanal einzubringen. Eingeschlossen sind Türen, Klappen, Schächte, Stollen und Kanalabdeckungen.

Nach der Erfindung wird die Aufgabe gelöst durch eine Anlage zur Nutzung von Wärmeenergie aus Kanälen, bei der einer oder mehrere Wärmetauscher in die Kanäle eingebracht werden, um die dort vorhandene Wärme entnehmen zu können oder erforderlichenfalls Wärme einzubringen. Dies geschieht, indem innerhalb des Kanals im Bereich der stehenden oder strömenden Luft und ohne Kontakt zu strömenden flüssigen Medien Wärmetauscher angeordnet sind, die den Wärmeaustausch bewirken.

Nach der Erfindung wird die Aufgabe durch ein Wärmeenergie-Nutzungsverfahren gelöst, bei dem die oben beschriebene Anlage angewendet wird, und durch eine Optimierung der Prozesse zur Wärme- beziehungsweise Kälteerzeugung ein notwendiges Arbeitsregime eingestellt wird, bei dem der Luft in Kanälen entweder Wärme entnommen oder zugeführt wird.

Bei der erfindungsgemäßen Anlage zur Nutzung von Wärmeenergie aus Kanälen wird durch Nutzung eines Zuganges zum Kanal wenigstens ein Wärmetauscher im von der Luft ausgefüllten Raum installiert.

Vorzugsweise handelt es sich bei dem Wärmetauscher um einen sogenannten Lamellenwärmetauscher, da solcher Art Geräte eine kompakte Bauweise bei zugleich großer aktiver Oberfläche haben und deshalb besonders wenig Bauraum beanspruchen und deshalb auch in engen Kanalquerschnltten oder insbesondere im Zugangsbereich zu Kanälen angeordnet werden können.

Vorzugsanordnungen für die Wärmetauscher sind im Deckenbereich des Kanalquerschnitts oder an deren Seitenwänden.

Vorteilhaft ist eine Anordnung der Wärmetauscher im Bereich der Zugänge zu den Kanälen. Diese Form der Anordnung hat den Vorteil, dass im Zugangsbereich auch eine einfache Wartung möglich ist. Dazu kann der Wärmetauscher so angeordnet sein, dass er nach dem Öffnen oder zeitgleich mit dem Öffnen aus dem Zugang entfernt wird, wodurch der Zugang zugleich für andere Arbeiten nutzbar wird. Es ist ebenso möglich, den Wärmetauscher als kompakte Einheit auszugestalten, die nach dem Öffnen des Zugangs entnommen werden kann.

Zur Steigerung des Umwandlungsgrades ist am Wärmetauscher wenigstens ein Ventilator angeordnet. Auf diese Weise wird in verstärktem Maße erwärmte Luft zu- oder abgeführt und der Wärmeaustausch gewährleistet.

Nach der Erfindung wird der Umstand genutzt, dass sich in Kanälen ein gleichbleibend hohes Temperatumiveau ausbilden kann. Die tatsächlich erreichte Temperatur hängt dabei von der in den Kanal eingebrachten Wärmemenge ab. Diese wiederum wird beeinflusst von der stets vorhandenen Erdwärme und/oder durch externe Wärmequellen, wie stehende oder fließende Wässer, fließende Abwässer, durch Kondensationsprozesse, die Abwärme in den Kanälen betriebener Anlagen, die Abwärme in den Kanälen fahrender Fahrzeuge, wie beispielsweise Bahnen oder Straßenfahrzeuge oder die in Wärme umgewandelte Bremsenergie von Fahrzeugen.

So kann die Anlage zur Nutzung von Wärmeenergie aus Kanälen in den Zugängen von Tunnels angeordnet werden, in denen beispielsweise Bahnen verkehren. Dabei kann der Umwandlungsgrad durch die beim Bahnverkehr entstehende Luftströmung zur Erhöhung des Umwandlungsgrades der Wärmetauscher zusätzlich erhöht werden.

Bei der oben beschriebenen Anordnung wird zugleich eine Absenkung des Temperaturniveaus in Tunnels und damit eine wünschenswerte Verbesserung der Betriebsbedingungen für die verkehrenden Bahnen oder Straßenfahrzeuge erreicht.

Es ist vorteilhaft, eine örtliche Trennung von Verdampfer und Kondensator der Luft-Wasser-Wärmepumpe vorzusehen, wobei die eine Komponente außerhalb und die andere Komponente innerhalb des Kanals angeordnet ist. Dabei kann jede der beiden Hauptkomponenten abhängig vom Betriebszustand die Aufgabe des Verdampfers oder die des Kondensators übernehmen. Somit ist sichergestellt, dass die Anlage sowohl zum Heizen als auch zum Kühlen eingesetzt werden kann.

Eine Ausführungsform der Anlage besteht darin, dass das Medium nicht komprimiert wird, sodass zur Aufrechterhaltung der Strömung lediglich Pumpen mit geringeren Antriebsleistungen zum Einsatz kommen müssen. Eine Leistungssteigerung durch Kompression, wie bei herkömmlichen Wärmepumpen üblich, ist ebenso möglich.

Ideale Betriebsbedingungen für eine Luft-Wasser-Wärmepumpe werden bei Verfügbarkeit von Luft mit einem Temperaturniveau von wenigstens 0,5° C mit einer hohen relativen Luftfeuchtigkeit erreicht. Die Energie zum Heizen und Kühlen soll über einen Wärmetauscher der Kanalluft entnommen werden.

Aus energetischer Sicht ist die im Kanal stehende oder strömende Luft Träger einer erneuerbaren Energie in Form von Wärme, wobei der Energiegehalt der Luft auch in Abhängigkeit des Feuchtigkeitsgehaltes (Anteil von Wasserdampf im Gasgemisch) steht.

In Kanalsystemen, die Abwasser aufnehmen und transportieren, herrschen nahezu ständig Temperaturen von ca. 10 bis 15 °C. An bestimmten Stellen der Einleitung von hochtemperierten Wässern wird dieses Niveau noch übertroffen und kann 25 °C oder mehr erreichen.

In Kanälen, die als sogenannte Kühltunnel für industrielle Prozesse dienen, können weit höhere Temperaturen herrschen, weshalb dort große Energiemengen rückgewinnbar sind.

In Kanälen, die als Tunnel ausgeführt sind und durch Fahrzeuge befahren werden, ergeben sich erwärmte Luftmengen, die zudem durch Staueffekte von den Fahrzeugen durch die Tunnel bewegt oder teilweise verwirbelt werden. Das beim Betrieb der Fahrzeuge sich ausbildende erhöhte Temperaturniveau kann energiewirtschaftlich genutzt werden.

Sind die Kanäle tief liegende Bergwerksstollen, kann geothermisch Energie gewonnen oder gespeichert werden.

Ein Wärmetauscher in einer diesen Bedingungen angepassten Auslegung und Konstruktion ist unter Ausnutzung seiner großen Oberfläche besonders geeignet, das gesamte verfügbare Temperatumiveau einer energetischen Nutzung zu zuführen. Durch die Verwendung der Materialart Edelstahl ist eine dauerhafte Bauweise auch unter den Bedingungen aggressiver Medien möglich.

Es findet eine stabile Wärmeübertragung durch Konvektion auf die im Kanal ständig vorhandene Umgebungsluft statt. Gleichzeitig ist diese Luft bestrebt, ein hohes Maß an Feuchtigkeit über den Verdunstungsprozess aufzunehmen. So herrscht beispielsweise in wasserführenden Kanälen ständig eine Luftfeuchte von ca. 80%. Beide Bedingungen sind ideal für den Betrieb einer Luft-Wasser-Wärmepumpe.

Eine Anlage zum Heizen und/oder Kühlen entnimmt durch Anordnung eines Lamellenwärmetauschers in einem Kanal die benötigte Energie dem Medium Luft. Die Lösung deckt in Kombination mit einer für diesen Verwendungszweck angepassten Luft-Wasser-Wärmepumpe einen Bedarf an warmem Heizwasser und warmem Wasser zum sonstigen Gebrauch sowie an Kälte, in einem Temperaturbereich von ca. 10 bis 15 ° C in Kombination mit einem für diesen Zweck angepassten Kühler. Als Energieträger wird die im Kanalsystem beständig vorhandene Luft verwendet. Diese Umgebungsluft ist durch ein relativ gleichmäßiges Temperatumiveau und zumeist auch durch eine hohe Luftfeuchte charakterisiert.

Ein Temperatumiveau um ca. 10° C eignet sich sehr gut für bestimmte Kühlprozesse.

### Zusammengefasst ergeben sich durch die Erfindung eine Reihe von Vorteilen:

Das sehr hohe Energiepotenzial der in den Kanälen vorhandenen Luft, beständig und relativ stabil in einer Temperatur deutlich über dem Gefrierpunkt zur Verfügung stehend, wird einer Ressourcen schonenden und gewinnorientierten Nutzung zugeführt. Damit stehen beispielsweise Kommunen eigene Energiequellen zur energetischen Nutzung und Verwertung im Megawattbereich zur Verfügung.

Die Energie im Kanal wird durch im Kanal strömende erwärmte Medien, beispielsweise durch fließendes Kanalwasser, durch Prozessenergie und durch Temperaturausgleich über die Kanalbauteile durch die Erdwärme ständig nachgeheizt.

Die Lösung kann unter Verwendung historisch gewachsener und vorhandener Kanalsysteme und deren baulichen Anlagen angewandt werden. Investitionskosten beschränken sich auf den Einbau der Wärmetauscher, die zusätzliche Leitungsführung und die Abnahmesituation (Kühlen oder Heizen).

Für die Prozesse Kühlen oder Heizen wird das Medium Luft als Träger von erneuerbarer Energie verwendet. Damit erfolgt eine weitgehende Entkopplung von Energiepreisen für Energieträger und gleichzeitig die Ablösung der Verwendung fossiler Brennstoffe.

Das bei bekannten Luft-Wärmepumpenlösungen zwingend erforderliche Nachheizen bei Außenaufstellung entfällt immer. Das hat positiv zur Folge, dass dafür keine zusätzliche Energie erforderlich ist.

Die Betriebsweise der Luft-Wasser-Wärmepumpe erfolgt nie im Temperaturbereich unter dem Gefrierpunkt und häufig bei hoher Luftfeuchte. Damit wird ein hoher Wirkungsgrad erreicht. Die Jahresarbeitszahl und das COP kann damit einen hohen Wert erreichen.

Die Kanalluft ist nicht mit technologische Erschwernisse verursachenden Schweb- und Sinkstoffen belastet.

Es kann die Verwendung von Kühlem in einem bestimmten Temperaturbereich erfolgen, die ohne kostenintensive Kompressions- oder Absorptionsprozesse effizient arbeiten (z. B. die Frostfreihaltung von Gebäuden).

Die Energieabnahme über den Lamellenwärmetauscher hat unter bestimmten Betriebsbedingungen ein deutliches Abkühlen der Kanalluft zur Folge. Diese Kühlung schränkt nicht gewollte Faulgasentwicklungen und Algenbildung in Abwasserkanälen ein.

Durch die Verwendung eines Lamellenwärmetauschers im Kanal selbst in Verbindung mit einem im geschlossenen Kreislauf arbeitenden System erfolgt die vollständige Trennung der das Abwasser umgebenden aggressiven Luft vom Verwendungsprozess der Wärme.

Es wird den Heiz- und Kühlprozessen unabhängig von Tag oder Nachtzeiten sowie unabhängig von Jahreszeiten, beständig ein stabiles Energieaufkommen erschlossen und zur Verfügung gestellt.

Die Luft im Kanal wird auch durch die den Kanal bildenden Bauteile/ Baustoffe erwärmt und damit immer wieder nachgeheizt. Über diese Bauteile erfolgt ständig die Übertragung der Erdwärme, welche in den beschriebenen Tiefen regelmäßig eine Lufttemperatur in den Kanälen bei ca. 10 °C bewirkt.

Das Kanalsystem wird energetisch als geschlossenes System betrachtet und durch von den einleitenden Haushalten oder Unternehmen bereits einmal aufgewendeten Energiemengen oder durch Erdwärme oder durch Prozessenergie gespeist.

Dieses Potenzial, bisher Energieverlust, wird einer erneuten Nutzung zugeführt. Damit werden eine hohe Energieeffizienz und ein betriebswirtschaftlich messbarer Zusatznutzen gesichert.

Das Kanalsystem bietet häufig eine hohe Zahl von Energieentnahmepunkten. Diese können in unmittelbarer Nähe potenzieller Verbraucher für emeuerbare Energie ausgewählt werden.

Das Kanalsystem selbst kann darüber hinaus zur Aufnahme des Leitungs- und Verbindungssystems zwischen Wärmetauscher und Luft-Wasser-Wärmepumpe oder Kühler verwendet werden. Damit werden die Investitionskosten stark gemindert.

Im Vergleich zur Verwendung von Solewärmepumpen werden keine Erdbohrungen und keine Erdsonden erforderlich. Gleichzeitig liegt ein höheres Temperaturniveau vor, als bei dieser Wärmepumpenart. Eine dauerhafte Auskühlung des Energieträgers wird durch ständige Energiezufuhr verhindert.

Nachfolgend soll die Lösung anhand eines Ausführungsbeispiels näher erläutert werden.

In einem Kanalsystem ist an Stellen, welche zur Revision oder sonstigem Betreten vorhanden sind, ein Wärmetauscher montiert. Hierzu eignen sich in der Regel bauseitig vorhandene mit einem Deckel oder einer Tür geschlossene Zugänge. Die Montage erfolgt wieder entnehmbar, beweglich oder flexibel, sodass eine Revision oder das Betreten nicht behindert wird.

Der Lamellenwärmetauscher entnimmt der Kanalluft eine bestimmte Wärmemenge und leitet diese über ein zusätzlich zu installierendes geschlossenes Leitungssystem zu einer Luft-Wasser-Wärmepumpe oder zu einem Kühler.

Der Kühler, in seiner Bauweise nur mit einem Ventilator ausgestattet ohne Kompressor, benutzt die gewonnene emeuerbare Energie, unter Umständen auch in Verbindung mit einem Pufferspeicher, zur Versorgung von unterschiedlichen Abnehmern, die eine Energiezufuhr oder einen Energieentzug benötigen.

Solche Situationen bestehen beispielsweise beim Kühlen von EDV-Anlagen oder Büros.

Die Aufstellorte der Luft-Wasser-Wärmepumpe oder des Kühlers werden von der vorhandenen Abnahmesituation und einer betriebswirtschaftlichen Betrachtung bestimmt.

Der Nachteil aus der relativen Aggressivität des Mediums Luft bei den o. g. Bedingungen durch Ammoniak und andere Gase wird durch die Verwendung der Materialart Edelstahl für den Wärmetauscher ausgeglichen.

In weiteren besonderen Ausgestaltungen der erfinderischen Lösung ist es auch möglich, mehrere hier beschriebene Heiz- oder Kühlanlagen in einem System kombiniert anzuordnen. Dies ermöglicht, eine weitere Erhöhung der Effizienz und Kapazität bei der Bereitstellung von Heiz- oder Kühlwasser zu erreichen.

## Patentansprüche

1. Anlage zur Nutzung von Wärmeenergie aus Kanälen,
bei der unter Verwendung von Wärmetauschern innerhalb eines Kanals oder seiner Bauteile die benötigte Energie der darin befindlichen Kanalluft entnommen wird,
wobei zusätzliche Energie in Form von Erdwärme über die den Kanal bildenden Bauteile und Baustoffe oder durch im Kanal stehende oder strömende Medien oder aus Betriebswärme im Kanal angeordneter Einrichtungen beziehungsweise aus im Kanal sich bewegenden Verkehrsmitteln der Kanalluft zugeführt werden kann,
wobei die Luft einen Temperaturbereich von etwa 10 bis 25 ° und eine Luftfeuchte von etwa 60 bis 80% hat,
und der Wärmetauscher Bestandteil einer Luft-Wasser-Wärmepumpe ist,
**dadurch gekennzeichnet, dass**
das die Luft-Wasser-Wärmepumpe durchströmende Medium ohne Verwendung von Kompressoren mit einem Temperaturniveau zwischen ca. 10 und 15 °C einem thermischen Prozess zur Verfügung steht.

2. Anlage zur Nutzung von Wärmeenergie aus Kanälen nach Anspruch 1,
**dadurch gekennzeichnet, dass**
geräteseitig eine örtliche Trennung von Verdampfer und Kondensator vorhanden ist.

3. Anlage zur Nutzung von Wärmeenergie aus Kanälen nach einem der Ansprüche 1 oder 2,
**dadurch gekennzeichnet, dass**
am im Kanal angeordneten Wärmetauscher wenigstens ein Ventilator angeordnet ist.

4. Anlage zur Nutzung von Wärmeenergie aus Kanälen nach einem der Ansprüche 1 bis 3,
**dadurch gekennzeichnet, dass**
der Wärmetauscher in kanalseitig vorhandenen Zugängen angeordnet ist.

5. Anlage zur Nutzung von Wärmeenergie aus Kanälen nach Anspruch 4,
**dadurch gekennzeichnet, dass**
der Wärmetauscher entnehmbar und/oder beweglich gestaltet ist, um den Zugang zum Kanal zu gewährleisten.

6. Anlage zur Nutzung von Wärmeenergie aus Kanälen nach einem der Ansprüche 1 bis 5,
**dadurch gekennzeichnet, dass**
der Wärmetauscher in gegenüber den im Kanal vorhandenen Stoffen beständigen Werkstoffen ausgeführt ist.

7. Anlage zur Nutzung von Wärmeenergie aus Kanälen nach einem der Ansprüche 1 bis 6,
**dadurch gekennzeichnet, dass**
das Kanalsystem zur Aufnahme des Leitungs- und Verbindungssystems zwischen Wärmetauscher und Luft-Wasser-Wärmepumpe oder Rückkühler verwendet ist.

8. Wärmeenergie-Nutzungsverfahren
für die in Kanälen vorhanden Wärmeenergie
mit einer Anordnung nach einem der Ansprüche 1 bis 7,
**dadurch gekennzeichnet, dass**
die Wärme- und/oder Kälteerzeugung dahin gehend gesteuert wird, dass ausgehend vom Bedarfszustand der Abnehmer die Laufzeiten und/oder Laufintervalle der Luft-Wasser-Wärmepumpe oder des Rückkühlers abgestimmt werden.

9. Verwendung einer Anlage zur Nutzung von Wärmeenergie aus Kanälen nach einem der Ansprüche 1 bis 6, in Kanälen, die von Flüssigkeiten durchflossen sind oder in Kanälen, in denen erwärmte Flüssigkeiten stehen, oder in Kanälen, die als Kühltunnel betrieben werden, oder in Kanälen, die durch Bergwerksstollen gebildet sind, oder in von Fahrzeugen durchfahrenen Tunnel oder in Kanälen, in denen Abwärme erzeugende Einrichtungen betrieben werden.
